# EUROPEAN PATENT APPLICATION

(11) **EP 2 928 156 A1**
(43) Date of publication of application: **07.10.2015**
(21) Application number: 12840831.7
(22) Date of filing: 20.12.2012
(51) Int. Cl.: H04L 29/08

(54) **METHOD AND SYSTEM FOR CONTROLLING ACCESS TO WIRELESS ROUTING DEVICE**

(30) Priority: 03.12.2012 CN 201210508207
(71) Applicant: Huizhou TCL Mobile Communication Co., Ltd., Huizhou, Guangdong 516006 (CN)
(72) Inventor: XU, Dawang, Huizhou Guangdong 516006 (CN); XU, Shenlong, Huizhou Guangdong 516006 (CN); YIN, Haiping, Huizhou Guangdong 516006 (CN); DIMAURO, Vittorio, Huizhou Guangdong 516006 (CN); HU, Xuelong Ronald, Huizhou Guangdong 516006 (CN)
(74) Representative: Petraz, Gilberto Luigi
(86) International application number: PCT/CN2012/087067
(87) International publication number: WO 2014/086063

(57) **Abstract**

Method and system for controlling access to wireless router equipment is disclosed. The method includes: disposing an application module for controlling access to wireless router equipment in a mobile terminal in advance; the application module listening to a communication port of the mobile terminal, acquiring equipment information of the wireless router equipment after detecting UDP data packets transmitted from the wireless router equipment to the communication port, and transmitting equipment information of the mobile terminal and version information of application module to the wireless router equipment; sending user's data processing request to the wireless router equipment, and receiving response data generated based on the data processing request by the wireless router equipment. Control of access to wireless router equipment is realized. Limitation on real-time information acquisition caused by the conventional web page access method is overcome. The request timeout problem is solved. Power consumption and bandwidth occupancy are saved.

## Description

### FIELD OF THE INVENTION

The present invention relates to controlling access to wireless router equipment, more particularly, to a method and system for controlling the access to the wireless router equipment.

### BACKGROUND OF THE INVENTION

With the increased speed of cellular data, wireless routers having cellular data access points, which are called MiFis, are becoming more and more popular. However, the control of access to MiFi equipment is based on accessing web pages, which cause the following problems.

First, the access to web pages is based on Browser/Server (B/S) architecture in which the browser initiates a HTTP connection and sends a request to the server. The server thus responds passively. Under the circumstances, real-time information such as signal intensity, battery status, receiving a SMS message cannot be acquired in real time by adapting the web page access method. As a result, the real-time performance of access control is impacted.

Second, the web page access method is based on HTTP connection. There is a timeout issue with HTTP connection. For certain time-consuming requests, time limit is very likely exceeded and cause repeated request. Therefore, unwanted power consumption and unwanted bandwidth occupancy occur.

Furthermore, when considering equipment detection, the web page access method cannot automatically detect whether the mobile device connects to a correct piece of Mifi equipment.

It is therefore very important to make improvement on the prior art and make development.

### SUMMARY OF THE INVENTION

The present invention provides a method and system for controlling access to wireless router equipment to overcome the limitation on real-time acquisition of information caused by the prior art web page access method based on accessing the wireless router equipment and solve the request timeout problem.

The present invention provides a system in a mobile terminal for controlling access to wireless router equipment. The system comprises an application module for controlling the access to the wireless router equipment. The application module further comprises an equipment detection module, an information exchange module, and a data processing module, and they are sequentially connected. The equipment detection module is used for listening to a communication port in a mobile terminal, and making sure that a communication connection is established between the mobile terminal and the wireless router equipment when detecting that UDP data packets are transmitted from the wireless router equipment to the communication port. The information exchange module is used for acquiring equipment information of the wireless router equipment after the communication connection between the mobile terminal and the wireless router equipment is detected by the equipment detection module, and transmitting equipment information of the mobile terminal and version information of the application module to the wireless router equipment. The data processing module is used for sending user's data processing request to the wireless router equipment, and receiving and processing response data replied by the wireless router equipment. The equipment detection module is further used for pinging a default gateway to detect whether the mobile terminal is connected to a wireless router equipment.

According to the system in a mobile terminal for controlling access to wireless router equipment, data exchanged between the application module and the wireless router equipment is based on HTTP protocol.

According to the system in a mobile terminal for controlling access to wireless router equipment, data exchanged between the application module and the wireless router equipment is HTTP data packets, the HTTP data packet comprises a HTTP header and a user data segment, the user data segment is UTF-8 encoded data in XML format.

According to the system in a mobile terminal for controlling access to wireless router equipment, the application module further comprises a listener module for listening in the wireless router equipment in real time and receiving data actively transmitted by the wireless router equipment.

According to the system in a mobile terminal for controlling access to wireless router equipment, the listener module is further used for acquiring a result of a time-consuming request by listening in when the mobile terminal sends the time-consuming request to the wireless router equipment.

The present invention further provides a method for controlling access to wireless router equipment. The method comprises the following steps:
A. disposing an application module for controlling the access to the wireless router equipment in a mobile terminal in advance;
B. the application module listening to a communication port of the mobile terminal, acquiring equipment information of the wireless router equipment after detecting that UDP data packets are transmitted from the wireless router equipment to the communication port, and transmitting equipment information of the mobile terminal and version information of application module to the wireless router equipment;
C. the application module sending user's data processing request to the wireless router equipment, and receiving response data generated based on the data processing request by the wireless router equipment.

The step B further comprises:
B1. the application module pinging a default gateway to detect whether the mobile terminal is connected to a wireless router equipment.

According to the method for controlling access to wireless router equipment, the method further comprises the following step after the step C:
D. listening in the wireless router equipment in real time, and receiving data actively sent by the wireless router equipment.

In contrast to the prior art, the present invention method and system for controlling the access to the wireless router equipment overcomes the limitation on real-time acquisition of information caused by the prior art web page access method based on accessing the wireless router equipment. The problem of request timeout is solved. In addition, the power consumption and bandwidth occupancy are saved.

### BRIEF DESCRIPTION OF THE DRAWINGS

Fig. 1 is a schematic diagram showing a structure of a system for controlling access to wireless router equipment according the present invention.
Fig. 2 is a schematic diagram showing a structure of a system for controlling the access to the wireless router equipment according a preferred embodiment of the present invention.
Fig. 3 is a flow chart illustrating a method for controlling the access to the wireless router equipment according to the present invention.

### DETAILED DESCRIPTION OF THE PREFERRED EMBODIMENTS

In order to solve the problems exiting in the prior art web page access method, an application program is installed in the mobile terminal according to the present invention. The application program is utilized to control access to wireless router equipment so that real-time monitoring of network environment, connection status, and data transmission and exchange are achieved.

In order to make objectives, solutions and advantages of the present invention more clear and definite, embodiments of the present invention will be further described in detail with reference to the appended drawings. It should be understood that the embodiments are described only for explaining the present invention rather than limiting the present invention.

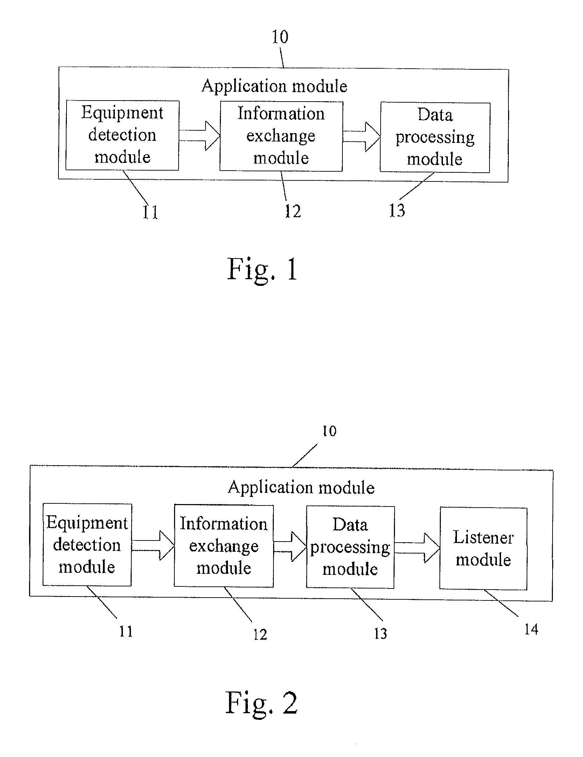

Please refer to Fig. 1, Fig. 1 is a schematic diagram showing a structure of a system for controlling access to wireless router equipment according the present invention. The system comprises an application module 10 for controlling the access to the wireless router equipment. The application module 10 is an application program operating in an intelligent mobile terminal, and is implemented in software. In the present embodiment, the wireless router equipment is MiFi. The data transmission between the mobile terminal and the wireless router equipment is through WiFi, and their exchange is based on HTTP protocol.

Specifically, the application module 10 comprises an equipment detection module 11, an information exchange module 12, and a data processing module 13, and they are sequentially connected. The equipment detection module 11 is used for listening to a communication port in the mobile terminal to make sure that a communication connection is established between the mobile terminal and the wireless router equipment when UDP data packets transmitted from the wireless router equipment are sent to the communication port. The information exchange module 12 is used for acquiring equipment information of the wireless router equipment after the communication connection between the mobile terminal and the wireless router equipment is detected by the equipment detection module 11. The information exchange module 12 is also used for transmitting equipment information of the mobile terminal and version information of the application module 10 to the wireless router equipment. Data processing module 13 is used for sending user's data processing request to the wireless router equipment, and receiving response data generated based on the data processing request by the wireless router equipment.

Specifically, a user command is received to initiate the application module 10. The equipment detection module 11 listens to the communication port in the mobile terminal in real time. In the present embodiment, the communication port is a port 80. After the mobile terminal is connected to the wireless router equipment through WiFi, the wireless router is able to capture the IP address of the mobile terminal and broadcasts the UDP data packets to the port 80 of the mobile terminal. Therefore, the equipment detection module 11 listens to the port 80 in real time to determine whether there are the UDP data packets transmitted from the wireless router equipment. If the port 80 in the mobile device receives the UDP data packets_transmitted from the wireless router equipment, the application module 10 will process the UDP data packets correspondingly. Specifically, determining whether the UDP data packets are a notification broadcasted by the wireless router equipment, if yes, the equipment detection module 11 detects that the mobile terminal has been connected to the wireless router equipment. Then the application module 10 starts reading the equipment information of the wireless router equipment. If the UDP data packets are not an active request from the wireless router equipment, the application module 10 discards the UDP data packets and continues listening to the port 80 of the mobile terminal until detecting that the mobile terminal is connected to the wireless router equipment.

In order to more accurately detect the communication connection with the wireless router equipment, the equipment detection module 11 in the application module 10 will also ping a default gateway to detect whether the mobile terminal is connected to a wireless router equipment. If a response to the ping operation by the wireless router equipment is received, then the mobile terminal is connected to the wireless router equipment correctly. Oppositely, the mobile terminal is not connected to any piece of wireless router equipment. Under the circumstances, the application module 10 will ping the wireless router equipment periodically until the mobile terminal is connected to the wireless router equipment.

After the communication connection between the mobile terminal and the wireless router equipment is detected, the information exchange module 12 in the application module 10 will read the equipment information of the wireless router equipment. The equipment information of the wireless router equipment comprises the protocol version, model, and firmware information of the wireless router equipment and network status and other business status. After acquiring the equipment information of the wireless router equipment, the information exchange module 12 will also transmit the equipment information of the mobile terminal and relevant information of application module 10 to the wireless router equipment. Hence, the application module 10 according to the present embodiment is able to support wireless router equipment having different protocols. Furthermore, the wireless router equipment will operate accordingly based on the different type of the mobile terminal and the different version of the application module 10. For example: the wireless router equipment may be used for transmitting data request actively when connecting with an intelligent mobile terminal, and respond passively when connecting with an embedded browser mobile terminal.

After the information exchange module 12 accomplishes the exchange of the equipment information between the mobile terminal and the wireless router equipment, the data processing module 13 in the application module 10 will send data processing request to the wireless router equipment based on user operations. In addition, the data processing module 13 will receive and process the response data replied by the wireless router equipment.

Since the data exchanged between the application module 10 and the wireless router equipment is based on HTTP protocol, HTTP data packets are transmitted between the application module 10 and the wireless router equipment. In the following, the exchanged HTTP data packet is specifically described. The HTTP data packet comprises a standard HTTP header and a user data segment defined by the user. In the present embodiment, the user data segment defined by the user is UTF-8 encoded data in XML (Extensible Markup Language) format. The user data segment comprises all user request information. The following example illustrates the user data segment:
User Request:

   ```
<xml version=" 1.0" encoding="UTF-8">
  <OnetouchLink>
             <SMS>
             <Request>
                           <GetSmsList/>
                    </Request>
             </SMS>
  </OnetouchLink>
```
Response Request:

   ```
<xml version=" 1.0" encoding="UTF-8">
  <OnetouchLink>
             <SMS>
             <Response>
                           <SmsMessage id="0">.
                                  <Status>Read</Status>
                                  <Content>First Message<Content/>
                                  <Destination>+86-13566661234<Destination/>
                                  <Date> 12.04.2012 12:00:00<Date/>
                                  <AlivePeriod>7<AlivePeriod/>
                           </SmsMessage>
                           <SmsMessage id="1">
                                  <Status>Unread</Status>
                                  <Content>Second Message<Content/>
                                  <Destination>+86-13566661234<Destination/>
                                  <Date>12.04.2012 12:00:00<Date/>
                                  <AlivePeriod>7<AlivePeriod/>
                           </SmsMessage>
             </Response>
             </SMS>
   </OnetouchLink>
```

In the present embodiment, OnetouchLink represents the application module. According to the user data segment requested by the user, the version of the XML format is 1.0, and the data is encoded in UTF-8 format. The user request is a SMS message. According to the response request, the SMS message ID is 0. The destination of the first message in the SMS message is "+86-13566661234". The time is "12.04.2012 12:00:00". The alive period is 7 days.

Of course, the above-mentioned user data segment is only for explaining the present embodiment rather than limiting the present embodiment. The user data segment of the present embodiment may be encoded in other formats and have different request and response.

Preferably, as shown in Fig. 2, the application module 10 according to the present invention further comprises a listener module 14. The listener module 14 is used for listening in the wireless router equipment in real time and receiving data actively transmitted by the wireless router equipment. Hence, the limitation of the conventional web page access method that HTTP connection cannot be actively established to send data to the browser no longer exists. The present invention application module 10 can also act as a server to receive data actively transmitted by the wireless router equipment, for example: network status changes, receiving a SMS message, etc. The application module 10 thus not needs to poll the wireless router equipment for network status. Rather, the listener module 14 can acquire the network status by listening in the network status actively transmitted by the wireless router equipment to skip the active request. The unwanted bandwidth occupancy is avoided and the power consumption is saved.

Moreover, the listener module 14 in the application module 10 can acquire a result of a time-consuming request by listening in when the mobile terminal sends the time-consuming request to the wireless router equipment. For example, conventional web page access tends to occur HTTP connection timeout and to cause repeated request when the mobile terminal searches the network based on user operation. According to the embodiment of the present invention, the mobile terminal only sends HTTP connection request to the wireless router equipment once. The listener module 14 will listen in and end the connection after the request is successfully sent to avoid the timeout problem.

The present invention system for controlling the access to the wireless router equipment is disposed in the mobile terminal. The mobile terminal may be an intelligent mobile terminal such as a cell phone, a tablet personal computer, etc.

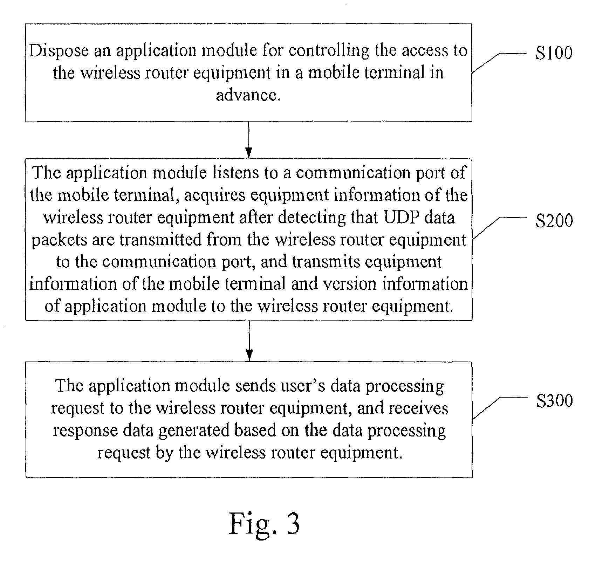

Based on the above-mentioned system for controlling the access to the wireless router equipment, the present invention further provides a method for controlling the access to the wireless router equipment. As shown in Fig. 3, the present invention method comprises the following steps:
Step S100: dispose an application module for controlling the access to the wireless router equipment in a mobile terminal in advance;
Step S200: the application module listens to a communication port of the mobile terminal, acquires equipment information of the wireless router equipment after detecting that UDP data packets are transmitted from the wireless router equipment to the communication port, and transmits equipment information of the mobile terminal and version information of application module to the wireless router equipment;
Step S300: the application module sends user's data processing request to the wireless router equipment, and receives response data generated based on the data processing request by the wireless router equipment.

Specifically, Step S200 further comprises: the above-mentioned application module pings a default gateway to detect whether the mobile terminal is connected to a wireless router equipment.

After Step S300, the present invention method further comprises: listen in the wireless router equipment in real time, and receive data actively sent by the wireless router equipment.

When data is exchanged between the application module and the wireless router equipment, the exchanged data will be transformed into XML format by the application module. The procedure is specifically described as above, and further description is not elaborated here.

In summary, an application module for controlling the access to the wireless router equipment is disposed in the mobile terminal according to the present invention method and system for controlling the access to the wireless router equipment. The application module listens to the communication port of the mobile terminal, acquires the equipment information of the wireless router equipment after detecting that the UDP data packets are transmitted from the wireless router equipment to the communication port, and transmits the equipment information of the mobile terminal and the version information of application module to the wireless router equipment. The application module sends user's data processing request to the wireless router equipment, and receives response data generated based on the data processing request by the wireless router equipment. The control of the access to the wireless router equipment is thus realized. The limitation on real-time acquisition of information caused by the prior art web page access method based on accessing the wireless router equipment is overcome. The problem of request timeout is solved. In addition, the power consumption and bandwidth occupancy are saved.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A system in a mobile terminal for controlling access to wireless router equipment, **characterized in that** the system comprises an application module for controlling the access to the wireless router equipment, and the application module further comprises sequentially connected:
an equipment detection module for listening to a communication port in a mobile terminal, making sure that a communication connection is established between the mobile terminal and the wireless router equipment when detecting that UDP data packets are transmitted from the wireless router equipment to the communication port, and for pinging a default gateway to detect whether the mobile terminal is connected to a wireless router equipment;
an information exchange module for acquiring equipment information of the wireless router equipment after the communication connection between the mobile terminal and the wireless router equipment being detected by the equipment detection module, and transmitting equipment information of the mobile terminal and version information of the application module to the wireless router equipment; and
a data processing module for sending user's data processing request to the wireless router equipment, and receiving and processing response data replied by the wireless router equipment.

2. The system in a mobile terminal for controlling access to wireless router equipment of claim 1, **characterized in that** data exchanged between the application module and the wireless router equipment is based on HTTP protocol.

3. The system in a mobile terminal for controlling access to wireless router equipment of claim 1, **characterized in that** data exchanged between the application module and the wireless router equipment is HTTP data packets, the HTTP data packet comprises a HTTP header and a user data segment, the user data segment is UTF-8 encoded data in XML format.

4. The system in a mobile terminal for controlling access to wireless router equipment of claim 3, **characterized in that** the application module further comprises a listener module for listening in the wireless router equipment in real time and receiving data actively transmitted by the wireless router equipment.

5. The system in a mobile terminal for controlling access to wireless router equipment of claim 1, **characterized in that** the application module further comprises a listener module for listening in the wireless router equipment in real time and receiving data actively transmitted by the wireless router equipment.

6. The system in a mobile terminal for controlling access to wireless router equipment of claim 5, **characterized in that** the listener module is further used for acquiring a result of a time-consuming request by listening in when the mobile terminal sends the time-consuming request to the wireless router equipment.

7. A system in a mobile terminal for controlling access to wireless router equipment, **characterized in that** the system comprises an application module for controlling the access to the wireless router equipment, and the application module further comprises sequentially connected:
an equipment detection module for listening to a communication port in a mobile terminal, and making sure that a communication connection is established between the mobile terminal and the wireless router equipment when detecting that UDP data packets are transmitted from the wireless router equipment to the communication port;
an information exchange module for acquiring equipment information of the wireless router equipment after the communication connection between the mobile terminal and the wireless router equipment being detected by the equipment detection module , and transmitting equipment information of the mobile terminal and version information of the application module to the wireless router equipment; and
a data processing module for sending user's data processing request to the wireless router equipment, and receiving and processing response data replied by the wireless router equipment.

8. The system in a mobile terminal for controlling access to wireless router equipment of claim 7, **characterized in that** data exchanged between the application module and the wireless router equipment is based on HTTP protocol.

9. The system in a mobile terminal for controlling access to wireless router equipment of claim 7, **characterized in that** data exchanged between the application module and the wireless router equipment is HTTP data packets, the HTTP data packet comprises a HTTP header and a user data segment, the user data segment is UTF-8 encoded data in XML format.

10. The system in a mobile terminal for controlling access to wireless router equipment of claim 7, **characterized in that** the application module further comprises a listener module for listening in the wireless router equipment in real time and receiving data actively transmitted by the wireless router equipment.

11. The system in a mobile terminal for controlling access to wireless router equipment of claim 10, **characterized in that** the listener module is further used for acquiring a result of a time-consuming request by listening in when the mobile terminal sends the time-consuming request to the wireless router equipment.

12. A method for controlling access to wireless router equipment, **characterized in that** the method comprises the following steps:
disposing an application module for controlling the access to the wireless outer equipment in a mobile terminal in advance;
the application module listening to a communication port of the mobile terminal, acquiring equipment information of the wireless router equipment after detecting that UDP data packets are transmitted from the wireless router equipment to the communication port, and transmitting equipment information of the mobile terminal and version information of application module to the wireless router equipment; and
the application module sending user's data processing request to the wireless router equipment, and receiving response data generated based on the data processing request by the wireless router equipment;
the step B further comprises:
B1. the application module pinging a default gateway to detect whether the mobile terminal is connected to a wireless router equipment.

13. The method for controlling access to wireless router equipment of claim 12, **characterized in that** the method further comprises the following step after the step C:
D. listening in the wireless router equipment in real time, and receiving data actively sent by the wireless router equipment.

14. A method for controlling access to wireless router equipment, **characterized in that** the method comprises the following steps:
A. disposing an application module for controlling the access to the wireless router equipment in a mobile terminal in advance;
B. the application module listening to a communication port of the mobile terminal, acquiring equipment information of the wireless router equipment after detecting that UDP data packets are transmitted from the wireless router equipment to the communication port, and transmitting equipment information of the mobile terminal and version information of application module to the wireless router equipment; and
C. the application module sending user's data processing request to the wireless router equipment, and receiving response data generated based on the data processing request by the wireless router equipment.

15. The method for controlling access to wireless router equipment of claim 14, **characterized in that** the method further comprises the following step after the step C:
D. listening in the wireless router equipment in real time, and receiving data actively sent by the wireless router equipment.
